# FASCICULE DE BREVET EUROPEEN

(11) **EP 2 506 793 B1**
(45) Date de publication et mention de la délivrance du brevet: **31.07.2013**
(21) Numéro de dépôt: 10801632.0
(22) Date de dépôt: 06.12.2010
(51) Int. Cl.: A61C 1/08

(54) **PIÈCE À MAIN COMPRENANT UN CORPS COMPRENANT UNE DOUILLE CREUSE**
HANDSTÜCK MIT EINEM KÖRPER MIT EINER HOHLEN HÜLSE
HANDPIECE COMPRISING A BODY INCLUDING A HOLLOW SLEEVE

(30) Priorité: 04.12.2009 FR 0905915; 18.02.2010 FR 1051176
(43) Date de publication de la demande: 10.10.2012
(73) Titulaire: Micro-Mega International Manufactures, 25000 Besancon (FR)
(72) Inventeur: GARCIA, Philippe, F-70190 Bussieres (FR); CLERGET, Laurent, F-25320 Byans Sur Le Doubs (FR)
(74) Mandataire: Poupon, Michel
(86) Numéro de dépôt international: PCT/FR2010/052621
(87) Numéro de publication internationale: WO 2011/067547

(56) Documents cités:
- EP-A2- 0 682 921
- WO-A1-2006/106189
- WO-A1-2007/005313
- DE-A1-102006 051 510

## Description

### Domaine technique et état de l'art

L'invention concerne une pièce à main comprenant une tête destinée à recevoir un outil, une douille arrière destinée à l'accouplement de la pièce à main sur un moteur et un corps reliant la tête à la douille arrière, le corps comprenant une douille creuse dans laquelle sont montés des organes mécaniques de transmission d'un mouvement de rotation à l'outil. L'invention trouve application notamment dans le domaine dentaire ou médical.

Les pièces à main ou contre-angles sont utilisés par les praticiens pour entraîner en rotation des outils destinés à fraiser les dents ou plus généralement à effectuer les différentes opérations que le dentiste est amené à pratiquer.

Les pièces à main sont, des instruments de précision et doivent permettre au dentiste d'effectuer des travaux de précision dans les meilleures conditions possibles, notamment en termes de visibilité et de confort. La zone de préhension de la pièce à main est donc très importante afin d'inspirer au praticien une précision tactile et un confort de prise en main.

Les pièces à main sont également souvent munies de moyens de refroidissement de la zone de travail de l'outil, adaptés pour amener un fluide, classiquement de l'eau ou de l'air comprimé, au voisinage de l'outil, pour refroidir l'outil et la dent traitée pendant le travail de l'outil. Les pièces à main sont également souvent équipées de moyens d'éclairage de la zone de travail, classiquement un conducteur de lumière qui transmet la lumière depuis la douille arrière de la pièce à main jusqu'à la zone de travail de l'outil.

Il est connu de placer les tubes de conduction des fluides et / ou les conducteurs de lumière à l'intérieur de douilles généralement métalliques qui enveloppent les tubes et le conducteur lumière autour de la douille creuse, mais il est assez complexe de faire cohabiter tous ces éléments avec les organes mécaniques de transmission du mouvement à l'intérieur de la douille creuse. On connaît également une pièce à main (EP 0 682 921) dans laquelle un tube à l'extérieur de la douille creuse permet d'amener un fluide de nettoyage tel que de l'eau au niveau de la tête de la pièce à main, c'est-à-dire au niveau de la zone à traiter. Toutefois, un tel tube extérieur gêne la prise en main de la pièce à main.

Par ailleurs, il est important de pouvoir nettoyer facilement les pièces à main pour éviter toute contamination du patient. Or, les pièces à main connues, souvent réalisées en plusieurs éléments assemblés, présentent des interstices difficiles d'accès et dans lesquels des contaminants tels que des bactéries sont susceptibles de se loger.

Enfin, la douille creuse constituant le corps des pièces à main actuelles est généralement usinée. L'usinage de la surface extérieure de la douille creuse est difficile et doit être particulièrement soigné car la surface extérieure de la douille est en contact directe avec la main du praticien. De plus, un procédé d'usinage permet seulement de réaliser des douilles dont la surface externe présente une symétrie circulaire par rapport à leur axe longitudinal. Une telle forme n'est pas optimisée par rapport à la forme de la main du praticien. L'utilisation de la pièce à main demande donc un effort d'adaptation de la part du praticien.

le document WO 2006 106 189 divulgue une pièce à main selon le préambule de la revendication 1.

### Description de l'invention

L'invention propose une nouvelle pièce à main, ne présentant pas au moins certains des inconvénients des pièces à mains connues décrites ci-dessus.

Plus précisément, l'invention propose une pièce à main par ailleurs conforme aux pièces à main connues décrites ci-dessus, et caractérisée en ce que le corps de la pièce à main comprend également une enveloppe surmoulée en matériau composite, enveloppe dans laquelle la douille creuse est noyée.

La douille creuse est généralement une pièce métallique usinée. Dans le cadre de l'invention, l'enveloppe extérieure est surmoulée sur la douille creuse et la douille est noyée dans l'enveloppe surmoulée.. La forme extérieure de la pièce à main est ainsi la forme extérieure de l'enveloppe, et non plus la forme extérieure de la douille creuse. La réalisation de la douille creuse est facilitée car il n'est plus nécessaire d'affiner sa forme extérieure lors de l'usinage puisque la douille creuse est entièrement recouverte par l'enveloppe. Par ailleurs, l'utilisation d'un matériau composite pour réaliser l'enveloppe facilite son moulage et la réalisation de sa surface externe qui doit être particulièrement soignée. Ainsi, la forme et la surface extérieure de l'enveloppe extérieure peuvent être aisément et économiquement optimisées pour s'adapter au mieux à la forme de la main du praticien. On peut ainsi envisager aisément une forme et une surface spécifiques pour des praticiens droitiers ou gauchers par exemple. Enfin, le corps de la pièce à main est monobloc et ne présente plus de cavités refuges pour bactéries et difficiles à nettoyer.

Le corps de la pièce à main peut être droit ou coudé, selon l'usage qui est envisagé.

selon l'invention le corps comprend au moins un tube destiné à conduire un fluide depuis la douille arrière jusqu'à la tête et / ou au moins un conducteur de lumière destiné à conduire la lumière depuis la douille arrière jusqu'à la tête. L'au moins un tube et / ou l'au moins un conducteur de lumière est (sont) noyé(s) avec la douille creuse dans l'enveloppe. Ainsi, l'enveloppe surmoulée positionne et maintient en place la douille creuse, le ou les tubes de conduction de fluide et le ou les conducteurs de lumière les uns par rapport aux autres. De plus, aucun tube ou conducteur de lumière à l'extérieur de l'enveloppe ne vient gêner la préhension de la pièce à main.

De préférence, une dureté de la matière composite est ajustée pour optimiser un confort de préhension de la pièce à main. Il est ainsi possible de réaliser des enveloppes en matériau plutôt dur ou plutôt mou, en fonction des préférences des utilisateurs ou de l'utilisation qui est faite de la pièce à main. De préférence encore, une forme extérieure de l'enveloppe est ajustée pour optimiser le confort de préhension de la pièce à main. Le fait que l'enveloppe soit surmoulée et non pas usinée facilite sa réalisation et l'optimisation de sa forme extérieure.

Le matériau composite est par exemple de type PEEK (polyétheréthercétone), matière plastique thermostable, ou en silicone. Ces deux matériaux ont l'avantage être résistants aux produits de nettoyage et aux opérations de stérilisation.

Une couleur de la matière composite peut être choisie en fonction de paramètres prédéfinis de la pièce à main, par exemple une vitesse d'entraînement en rotation de l'outil, un couple disponible sur l'outil et / ou un type d'outil prédéfini susceptible d'être monté sur la pièce à main. Par exemple, une couleur rouge pour les hautes vitesses, une couleur bleu pour les vitesses moyennes et une couleur verte pour les basses vitesses. En regardant la couleur, le praticien détermine ainsi immédiatement si une pièce à main est appropriée ou non pour une utilisation souhaitée.

L'enveloppe peut être recouverte d'une douille externe, par exemple en matériau métallique. La douille externe est par exemple de faible épaisseur ou très faible épaisseur. Une telle douille externe permet au praticien de trouver avec une pièce à main selon l'invention les mêmes sensations qu'avec les pièces à main antérieures pour la plupart métalliques. Une telle douille permet également de donner à une pièce à main selon l'invention un aspect esthétique différent d'une pièce à main comprenant seulement une enveloppe externe en matériau composite.

### Description du mode de réalisation de l'invention représenté sur les figures

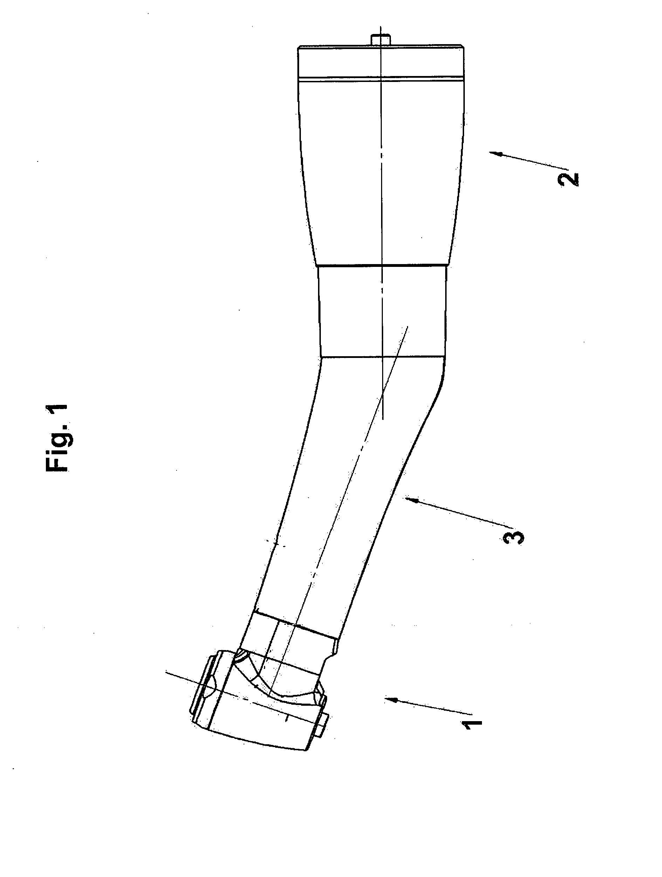

L'invention sera mieux comprise, et d'autres caractéristiques et avantages de l'invention apparaîtront à la lumière de la description qui suit d'un exemple de réalisation d'une pièce à main selon l'invention. Cet exemple est donné à titre non limitatif. La description est à lire en relation avec les dessins annexés dans lesquels les figures 1 à 3 sont respectivement une vue de face, une vue en coupe et une vue éclatée d'une pièce à main selon l'invention.

La pièce à main représentée sur les figures comprend une tête 1 destinée à recevoir un outil (non représenté) dans un fût 6, une douille arrière 2 destinée à l'accouplement de la pièce à main sur un moteur (non représenté) et un corps 3 reliant la tête 1 à la douille arrière 2. Le corps 3 comprend :
- une douille creuse 11 dans laquelle sont montés des organes mécaniques 4, 5 de transmission d'un mouvement de rotation à l'outil,
- deux tubes creux 8 destinés à conduire des fluides de refroidissement, par exemple de l'eau et de l'air, depuis la douille arrière 2 jusqu'à la tête 1 et
- un conducteur de lumière 9 destiné à conduire la lumière depuis la douille arrière 2 jusqu'à la tête 1.

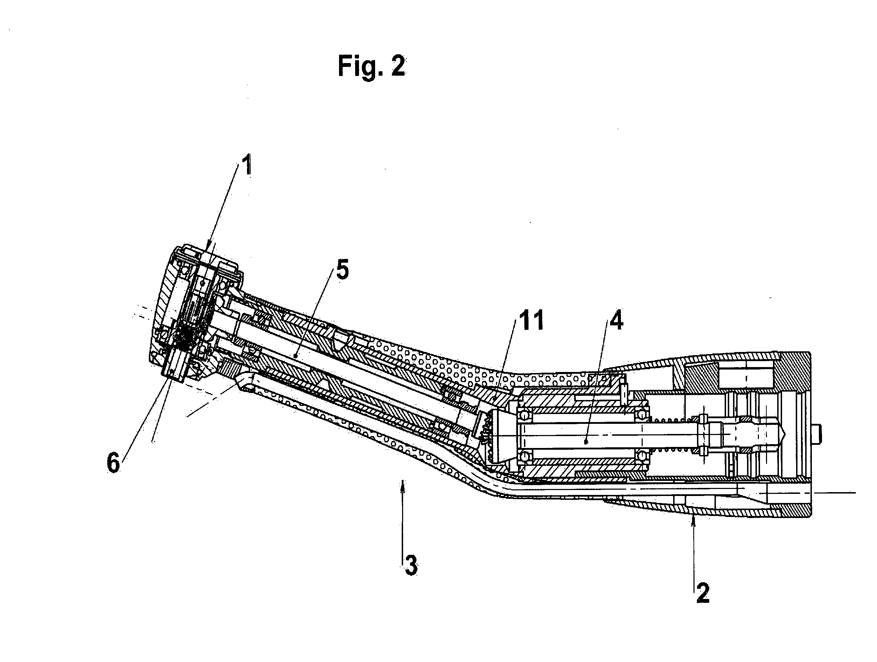

Dans l'exemple représenté, la douille creuse est métallique et a une forme générale cylindrique, ou plutôt la forme de deux cylindres associés en formant un coude (figures 2-3). La surface extérieure de la douille creuse ne présente pas les qualités habituelles de confort et d'état de surface des douilles creuses des pièces à main connues.

Dans l'exemple représenté également, le corps 3 de la pièce à main comprend une enveloppe 10 surmoulée en matériau composite dans laquelle la douille creuse 2, les tubes 8 et le conducteur de lumière 9 sont noyés. L'enveloppe recouvre entièrement la douille creuse de sorte qu'il n'est plus nécessaire de soigner la réalisation de la surface extérieure de la douille creuse. L'enveloppe fait partie intégrante de la pièce à main et lui donne sa forme extérieure. L'enveloppe étant moulée sur la douille creuse, elle est inamovible.

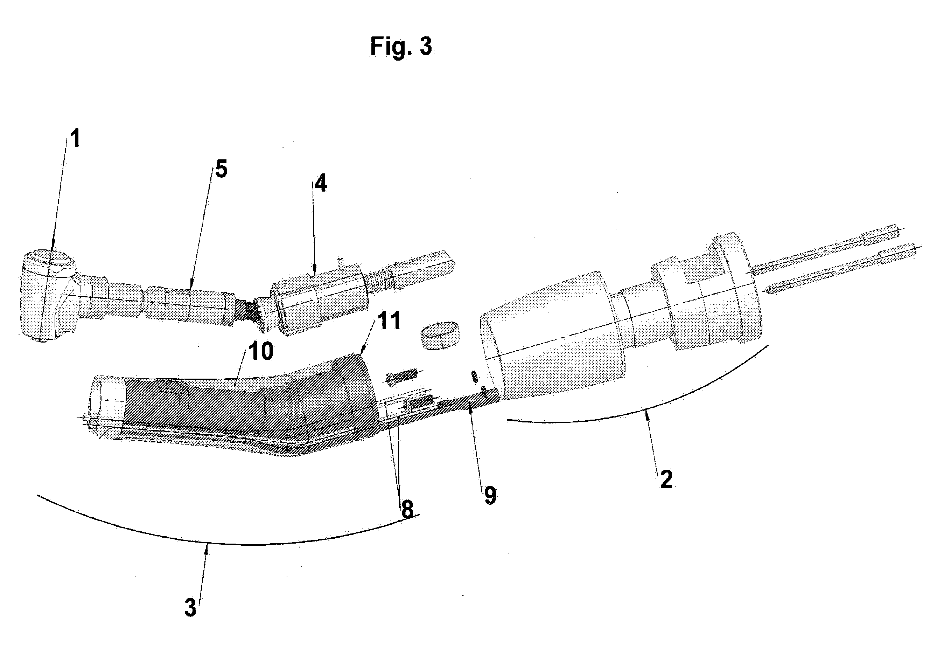

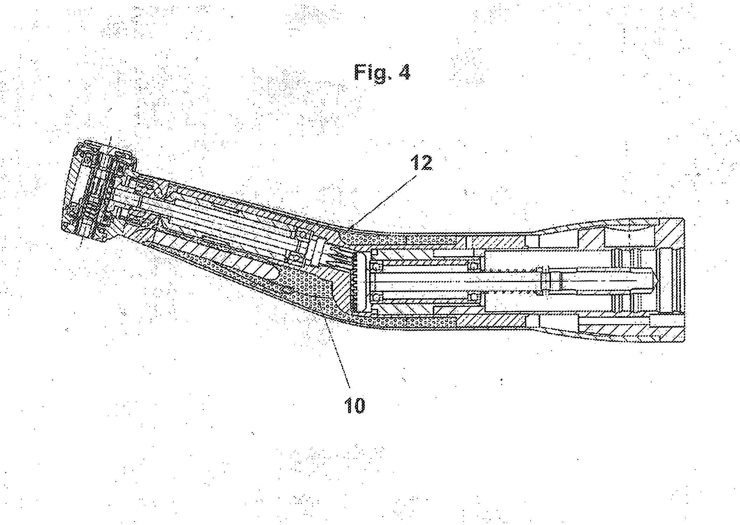

Dans l'exemple représenté, l'enveloppe 10 est rendue transparente sur la figure 3. A l'extérieur, l'enveloppe surmoulée a sensiblement la forme d'un cône à conicité variable et présente un coude. La surface extérieure est lisse, mais une surface plus rugueuse peut être envisagée pour une meilleure prise en main de la pièce à main. La surface intérieure de l'enveloppe est adaptée à la forme de la douille creuse qu'elle recouvre;

L'épaisseur de l'enveloppe est variable selon un axe longitudinal de l'enveloppe (figures 2-3). elle est fonction de la forme de la surface extérieure de la douille (choisie pour sa facilité d'usinage) et de la forme extérieure de l'enveloppe (choisie pour fournir un confort optimum au praticien).

L'épaisseur de l'enveloppe peut également être variable dans un plan perpendiculaire à l'axe longitudinal de l'enveloppe pour s'adapter au mieux à la forme de la main du praticien. On peut ainsi envisager aisément une forme et une surface spécifiques pour des praticiens droitiers ou gauchers par exemple.

## Revendications

1. Pièce à main comprenant une tête (1) destinée à recevoir un outil, une douille arrière (2) destinée à l'accouplement de la pièce à main sur un moteur et un corps (3) reliant la tête (1) à la douille arrière (2), le corps (3) comprenant une douille creuse dans laquelle sont montés des organes mécaniques (4, 5) de transmission d'un mouvement de rotation à l'outil, le corps (3) comprenant également au moins un tube (8) destiné à conduire un fluide depuis la douille arrière jusqu'à la tête et / ou au moins un conducteur de lumière (9) destiné à conduire la lumière depuis la douille arrière jusqu'à la tête (1),
la pièce à main étant **caractérisée en ce que** le corps (3) comprend également une enveloppe (10) surmoulée en matériau composite dans laquelle l'au moins un tube (8) et / ou l'au moins un conducteur de lumière (9) est (sont) noyé(s) avec la douille creuse dans l'enveloppe (10) surmoulée qui ainsi positionne et maintient en place la douille creuse, le ou les tubes de conduction de fluide et / ou le ou les conducteurs de lumière les uns par rapport aux autres.

2. Pièce à main selon la revendication 1, dans lequel une dureté de la matière composite est ajustée pour optimiser un confort de préhension de la pièce à main.

3. Pièce à main selon l'une des revendications 1 à 2, dans laquelle une forme extérieure de enveloppe (10) est ajustée pour optimiser le confort de préhension de ta pièce à main.

4. pièce à main selon l'une des revendications 1 à 3, dans laquelle une couleur de la matière composite est choisie en fonction de paramètres prédéfinis de la pièce à main, par exemple une vitesse d'entraînement en rotation de l'outil, un couple disponible sur l'outil et / ou un type d'outil predéfini susceptible d'être monté sur la pièce à main.

5. Pièce à main selon l'une des revendications précédentes, dans laquelle le corps est droit ou coudé.

6. Pièce à main selon l'une des revendications précédentes, dans laquelle le matériau composite est de type PEEK ou silicone.

7. Pièce à main selon l'une des revendications précédentes, dans laquelle l'enveloppe (10) est recouverte d'une douille externe (12), par exemple en matériau métallique.

## Patentansprüche

1. Handstück, aufweisend einen Kopf (1), der dazu bestimmt ist, ein Werkzeug aufzunehmen, eine hintere Hülse (2), die für die Kopplung des Handstücks an einen Motor bestimmt ist, und einen Körper (3), der den Kopf (1) mit der hinteren Hülse (2) verbindet, wobei der Körper eine hohle Hülse aufweist, in der mechanische Elemente (4, 5) zur Übertragung einer Drehbewegung auf das Werkzeug montiert sind, wobei der Körper (3) auch mindestens ein Rohr (8), das dazu bestimmt ist, ein Fluid von der hinteren Hülse zum Kopf zu leiten, und/oder mindestens einen Lichtleiter (9) aufweist, der dazu bestimmt ist, das Licht von der hinteren Hülse zum Kopf (1) zu leiten,
wobei das Handstück **dadurch gekennzeichnet ist, dass** der Körper (3) auch einen aufgeformten Mantel (10) aus Verbundmaterial aufweist, in dem mindestens ein Rohr (8) und/oder mindestens ein Lichtleiter (9) eingesetzt ist (sind), wobei sich die hohle Hülse in dem aufgeformten Mantel (10) befindet, der auf diese Weise die hohle Hülse, das oder die Fluidleitungsrohre und/oder das oder die Lichtleiter zueinander positioniert und in ihrer Stellung hält.

2. Handstück nach Anspruch 1, bei dem eine Härte des Verbundmaterials derart eingestellt ist, dass ein Greifkomfort des Handstücks optimiert wird.

3. Handstück nach einem der Ansprüche 1 und 2, bei dem eine äußere Form des Mantels (10) derart vorgesehen ist, dass der Greifkomfort des Handstücks optimiert wird.

4. Handstück nach einem der Ansprüche 1 bis 3, bei dem eine Farbe des Verbundmaterials in Abhängigkeit von vordefinierten Parametern des Handstücks, beispielsweise einer Drehantriebsgeschwindigkeit des Werkzeugs, einem am Werkzeug verfügbaren Moment und/oder einem vordefinierten Werkzeugtyp, der auf dem Handstück montiert werden kann, ausgewählt wird.

5. Handstück nach einem der vorhergehenden Ansprüche, bei dem der Körper gerade oder gebogen ist.

6. Handstück nach einem der vorhergehenden Ansprüche, bei dem das Verbundmaterial vom Typ PEEK oder Silikon ist.

7. Handstück nach einem der vorhergehenden Ansprüche, bei dem der Mantel (10) mit einer äußeren Hülse (12), beispielsweise aus Metall, verkleidet ist.

## Claims

1. A hand piece comprising a head (1) intended to receive a tool, a rear sleeve (2) intended for coupling the hand piece to a motor and a body (3) connecting the head (1) to the rear sleeve (2), the body (3) comprising a hollow sleeve inside which mechanical members (4, 5) for transmitting a rotational movement to the tool are mounted, the body (3) comprising at least one tube (8) intended to convey a fluid from the rear sleeve to the head and/or at least one light conductor (9) intended to convey the light from the rear sleeve to the head (1),
the hand piece being **characterised in that** the body (3) also comprises an overmoulded composite-material casing (10) inside which the at least one tube (8) and/or the at least one light conductor (9) is (are) embedded together with the hollow sleeve inside the overmoulded casing (10) which thus positions and keeps in place the hollow sleeve, the fluid conveying tube or tubes and/or the light conductor or conductors in relation to each other.

2. Hand piece according to claim 1, wherein the hardness of the composite material is adjusted so as to optimize the gripping comfort of the hand piece.

3. Hand piece according to any one of claims 1 to 2, wherein the external form of the casing (10) is adjusted so as to optimize the gripping comfort of the hand piece.

4. Hand piece according to any one of claims 1 to 3, wherein the colour of the composite material is chosen depending on predefined parameters of the hand piece, for example a rotational driving speed of the tool, a torque available on the tool and/or a predefined tool type able to be mounted on the hand piece.

5. Hand piece according to any one of the preceding claims, wherein the body is straight or angled.

6. Hand piece according to any one of the preceding claims, wherein the composite material is PEEK or silicone.

7. Hand piece according to any one of the preceding claims, wherein the casing (10) is covered with an outer sleeve (12), for example made of metallic material.
